# EUROPÄISCHE PATENTSCHRIFT

(11) **EP 1 522 383 B1**
(45) Veröffentlichungstag und Bekanntmachung des Hinweises auf die Patenterteilung: **06.08.2008**
(21) Anmeldenummer: 04023924.6
(22) Anmeldetag: 07.10.2004
(51) Int. Cl.: B23Q 16/04, B65G 47/26

(54) **Vorrichtung zum Stoppen von Transportgut**
Device for stopping goods
Dispositif d'arrêt des marchandises

(30) Priorität: 10.10.2003 DE 20315815 U
(43) Veröffentlichungstag der Anmeldung: 13.04.2005
(73) Patentinhaber: Grob-Werke GmbH & Co. KG, 87719 Mindelheim (DE)
(72) Erfinder: Groitl, Werner, 87778 Stetten (DE); Lochbrunner, Johann, 89233 Neu-Ulm (DE)
(74) Vertreter: Schulz, Manfred

(56) Entgegenhaltungen:
- US-A- 3 696 756
- US-A- 4 443 927
- US-A- 4 966 080
- US-A- 5 168 976
- US-A- 5 579 885

## Beschreibung

Die Erfindung betrifft eine Vorrichtung zum Stoppen von Transportgut, wie Werkstücke tragende Paletten oder der dergleichen in einer Transportbahn, wie zum Beispiel einer Materialflußbahn oder in einer Transferstraße, insbesondere zur Vereinzelung des Transportgutstromes nach dem Oberbegriff des Patentanspruches 1.

Vorrichtungen zum Stoppen von Transportgut sind in Transportbahnen, wie zum Beispiel in Materialflußbahnen oder in Transferstraßen, bekannt. Sie dienen insbesondere zur Vereinzelung des Transportgutstromes und bestehen aus wenigstens einer Rücklaufsperre und wenigstens einem Stopper. Diese Vorrichtungen dienen insbesondere dazu, beispielsweise einen Strom von Paletten zu vereinzeln. Dabei wird in den Förderweg bzw. in den Transportbereich des Transportgutes ein Stopper bei Bedarf geschwenkt bzw. bewegt, der dann die nächste Palette bzw. das nächste Transportgutstück aufhält bzw. anhält. Es ist auch bekannt, daß sich an dem Stopper in Einlaufrichtung vor dem Stopper eine Rücklaufsperre befinden kann. Diese Rücklaufsperre verhindert das Zurücklaufen des Transportgutes. Beim Einlaufen des Transportgutes in den Bereich der Rücklaufsperre wird die Rücklaufsperre, welche beispielsweise aus einem Bolzen mit schräger Kante besteht, heruntergedrückt, so daß die einfahrende Palette bzw. das Transportgut die Rücklaufsperre passieren kann und dann am Stopper angehalten wird. Durch eine Federkraft wird die Rücklaufsperre nach dem Passieren des Transportgutes wieder in die Wirkstellung gedrückt. In Rückwärtsbewegung wird dann das Transportgut gegen eine entsprechende Anlagefläche an der Rücklaufsperre gedrückt und damit ein Zurücklaufen verhindert. Durch Herausschwenken bzw. Herausnehmen des Stoppers aus dem Transportbereich wird das Transportgut wieder freigegeben. Die so beschriebenen Stopper erlauben aber nur einen Einsatz in eine Richtung. Das bedeutet, wenn zum Beispiel auf einer Transferstraße ein Werkstück auch in zwei Richtungen bewegt werden soll, daß in jedem Fall die Rücklaufsperre stört. Die Rücklaufsperre ist, wie zuvor beschrieben, nur an einer Seite abgeschrägt, daher nicht in Rückwärtsrichtung niederdrückbar. Dies würde dem eigentlichen Rücklaufzweck zuwiderlaufen, da dann keine blockierende Fläche mehr an der Rücklaufsperre vorhanden wäre.

Eine Vorrichtung wie zuvor beschrieben, ist aus der Druckschrift DE 195 43 797 A1 bekannt. Dabei wird für das Anhalten von Paletten in einer Transportvorrichtung ein von einem Elektromagneten angetriebener Anschlag vorgeschlagen, der eine Auf- und Abwärtsbewegung des Anschlages in oder aus der Transportvorrichtung bewirkt.

Eine weitere Transportvorrichtung der in Rede stehenden Art ist aus der Druckschrift DE 44 25 269 A1 bekannt. Dabei handelt es sich um eine Transportvorrichtung, zum Beispiel eine Fertigungs- oder Montagestraße mit mindestens einem Förderer, der mit mindestens zwei Werkstückträgern zusammenarbeitet. Die Transportvorrichtung besitzt eine Halterung und/oder Entlastungseinrichtung, durch welche die Werkstückträger festhaltbar und/oder mit dem Förderer in beziehungsweise außer Eingriff bringbar sind. Die in der Druckschrift beschriebene Vorrichtung dient dazu, sich im Stau befindlichen Werkstückträger zu individualisieren, so daß die jeweils benachbarten Werkstückträger auf den gewünschten Abstand zueinander gebracht werden.

Aus der Druckschrift DE 199 45 064 ist eine Vorrichtung zum Anhalten von Stückgut, insbesondere Werkstückträgern oder Werkstücken auf einem Stauförderer beschrieben. Auch diese Vorrichtung ist nur zum Transport und zum Vereinzeln von Werkstücken beziehungsweise Werkstückträgern in eine Transportrichtung geeignet.

Aus den Druckschriften US 5,168,976 und US 3, 696, 756 sind Vorrichtungen gemäß des Oberbegriffs von Patentanspruch 1 bekannt, die einen Stopper aufweisen, der an einem längsbeweglichen und schwenkbar gelagerten Zylinder befestigt ist und wobei gemäß der Druckschrift US 3,696,756 eine Rücklaufsperre vorgesehen ist, die in den Transportbereich ein- und ausfahrbar ist.

Ausgehend von dem zuvor beschriebenen Stand der Technik hat es sich die Erfindung zur Aufgabe gemacht, einen Stopper zu entwickeln, der die Möglichkeit des Anbringens von Antriebs- und/oder Federelementen an der Stoppereinheit, dem Stopper oder der Rücklaufsperre aufweist.

Zur Lösung dieser Aufgabe wird eine Vorrichtung zum Stoppen von Transportgut, wie Werkstücke tragende Paletten oder dergleichen in einer Transportbahn, wie zum Beispiel einer Materialflußbahn oder in einer Transferstraße, insbesondere zur Vereinzelung des Transportgutstromes, vorgeschlagen, die aus wenigstens einer Rücklaufsperre und einem Stopper besteht, wobei der Stopper in dem durch die Wirkebene der Transportbahn begrenzten Transportbereich des Transportgutes bringbar ist und die Rücklaufsperre den Transportgutfluß entgegen der Transportrichtung zu blockieren vermag, wobei Stopper und Rücklaufsperre aus dem Transportbereich wegbringbar sind und wobei eine Stopperachse vorgesehen ist, die mit dem Stopper mitbewegt wird, die sich dadurch auszeichnet, daß zum Ein- bzw. Ausbringen des Stoppers in bzw. aus dem Transportbereich ein Kniehebelgelenk, bestehend aus einem kurzen und einem längeren Schenkel, vorgesehen ist, die Schenkel über ein Gelenk verbunden sind, der kürzere Schenkel an der Stopperachse und der längere Schenkel an einer von dem Transportbereich weiter beabstandet vorgesehenen Schenkelachse beweglich gelagert sind.

Dadurch, daß Stopper und Rücklaufsperre aus dem Transportbereich wegbringbar sind, ist es möglich, jetzt auch eine Rückförderung von Transportgut zu ermöglichen. Die Rücklaufsperre stört nunmehr die Rückwärtsbewegung nicht. Die Ausbildung mit einem Kniehebelgelenk ist insbesondere von Vorteil, wenn man Antriebs- bzw. Federelemente für das Ein- bzw. Ausbringen der Stoppeinheit bzw. des Stoppers oder der Rücklaufsperre vorsehen möchte. Für diese Art ist eine Ausbildung mit Kniehebelgelenk von Vorteil.

Ein weiterer Aspekt der Erfindung ist dadurch angegeben, daß die Ansteuerung von Stopper und Rücklaufsperre an dem längeren Schenkel des Kniehebelgelenkes vorgesehen ist. In gleicher Weise ist es jedoch auch möglich, die Ansteuerung nicht an dem längeren Schenkel, sondern am Gelenk direkt vorzusehen.

Von Vorteil ist es weiterhin, wenn ein Antrieb für die Knickbewegung des Kniehebelgelenks vorgesehen ist und der Antrieb an dem längeren Schenkel des Kniehebelgelenks angreift. Wie zuvor beschrieben, ist es jedoch auch möglich, daß der Antrieb direkt an dem Gelenk angreift, wenn dies über die jeweils zu realisierende Stoppvorrichtung erforderlich ist bzw. als günstig erscheint.

Als Antrieb kann dabei ein Zug- bzw. Stellmagnet, ein elektrischer, hydraulischer bzw. pneumatischer Stellantrieb vorgesehen werden.

Dabei ist es weiterhin von Vorteil, wenn der als Zug- bzw. Stellmagnet ausgebildete Antrieb ein Elektromagnet ist, der mit einer entgegen der Zugkraft wirkend angeordneten Feder ausgestattet ist. Selbstverständlich ist es auch möglich, eine zusätzliche Rückstellfeder vorzusehen, wie dies in einer weiteren Ausführung nach der Erfindung möglich ist. Die Rückstellfeder ist dabei vorteilhafterweise am Gelenk des Kniehebelgelenks angeordnet und um eine Federachse drehbar bzw. schwenkbar gelagert. Die Federkraft der Feder wirkt ebenfalls entgegen der Zugkraft des Antriebs.

Da für die Betätigung der Knickbewegung des Kniehebelgelenks ein nicht unerheblicher Energiebedarf notwendig ist, ist es von Vorteil, eine Arretierungsmöglichkeit vorzusehen, um die Stoppeinheit beispielsweise in der abgesenkten, ausgeschwenkten bzw. herausgenommenen Stellung zu halten. Dies geschieht beispielsweise dadurch, daß die. Arretierungsmöglichkeit das Kniehebelgelenk in der abgeknickten Stellung hält. Damit ist die Stoppeinheit bzw. Stopper und Rücklaufsperre aus dem Wirkungsbereich der Transportbahn herausgenommen.

Eine vorteilhafte Weiterbildung der Erfindung ist dadurch angegeben, daß der Stopper und die Rücklaufsperre ansteuerbar, insbesondere gemeinsam ansteuerbar, ausgebildet sind. Dadurch wird erreicht, daß man sowohl den Stopper als auch die Rücklaufsperre durch eine entsprechende Ansteuerung aus dem Transportbereicht wegbringen kann. Dies kann durchaus durch jeweils eigenständige Steuerelemente oder aber auch durch ein gemeinsames Steuerelement erfolgen. Dabei ist es erfindungsgemäß möglich, daß Stopper und Rücklaufsperre unterschiedlich ansteuerbar sind, derart, daß zunächst der Stopper in den Transportbereich hereingebracht wird und dann erst die Rücklaufsperre.

Entsprechend einer vorteilhaften Weiterbildung ist es selbstverständlich auch möglich, daß Stopper und Rücklaufsperre gemeinsam bzw. gleichzeitig aus dem Transportbereich wegbringbar sind bzw. in diesen einbringbar sind.

Eine vorteilhafte Weiterbildung der Erfindung sieht vor, daß Stopper und Rücklaufsperre in unterschiedlichen, voneinander getrennten Baugruppen angeordnet sind. Dies ermöglicht zum einen die zuvor beschriebene unterschiedliche Ansteuerung besser. Es ist jedoch auch möglich, für unterschiedliche Aufgaben derartige Baugruppen so vorzusehen, wie sie benötigt werden. Beispielsweise sind für bestimmte Vereinzelungsaufgaben nur Stopper ohne Rücklaufsperren notwendig, während für andere Vereinzelungsaufgaben durchaus beide Baugruppen benötigt werden. Insbesondere der Einsatz in metallbearbeitenden Transferlinien erfordert beispielsweise die geschützte Anordnung von Baugruppen, die beispielsweise durch Späne oder Kühlflüssigkeit verunreinigt werden könnten. Der Schutz solcher unterschiedlich angeordneten Baugruppen ist gegebenenfalls einfacher zu realisieren als die Unterbringung in einer gemeinsamen Baugruppe.

Die Erfindung ist jedoch nicht auf die Anordnung in unterschiedlichen Baugruppen begrenzt und insbesondere in normalen Transferstraßen, wo lediglich Werkstücke bzw. Transportgut transportiert und vereinzelt werden sollen, ist es sinnvoll, daß entsprechend einer Weiterbildung der Erfindung Stopper und Rücklaufsperre in einer gemeinsamen Stoppeinheit angeordnet sind.

Erfindungsgemäß wurde auch gefunden, daß es von Vorteil ist, wenn die Stoppeinheit um einen Drehpunkt drehbar bzw. schwenkbar angeordnet ist, derart, daß sie insgesamt in den Transportbereich der Transportbahn ein- bzw. ausschwenkbar ist. Durch diese Anordnung ist es leicht möglich, die gesamte Stoppeinheit inklusive des Stoppers und der Rücklaufsperre in den Transportbereich hinein- bzw. wenn erforderlich aus ihm wieder herauszuschwenken. Dazu benötigt man dann lediglich eine einzige Ansteuerung, um dies zu realisieren.

Von Vorteil ist es auch, wenn die Stoppeinheit ein Gehäuse aufweist. In dem Gehäuse sind dann alle funktional erforderlichen Teile der Stoppeinheit, wie beispielsweise Stopper, Rücklaufsperre, Feder, Gelenke, Achsen und dergleichen, angeordnet. Das Gehäuse läßt sich auch leicht bzw. besser gegen Verschmutzungen schützen, als dies durch offen angeordnete Baugruppen oder Baueinheiten möglich ist.

Bevorzugt ist es, wenn die Stoppeinheit unterhalb des Transportbereiches angeordnet ist. In gleicher Weise ist es jedoch auch möglich, die Stoppeinheit hängend bzw. oberhalb des Transportbereiches anzuordnen. Eine Weiterbildung sieht außerdem vor, die Stoppeinheit seitlich neben dem Transportbereich anzuordnen. Es ist lediglich erforderlich, die jeweils korrespondierenden Mittel des Transportgutes in dem Transportbereich so anzuordnen, daß die Stoppeinheit bzw. die Rücklaufsperre und der Stopper jeweils eingreifen können. Dies ist konstruktiv leicht zu lösen, wenn die jeweils gewünschte Anordnung einmal gewählt ist.

Von Vorteil ist es, wenn die Rücklaufsperre federgelagert ist und zwar derart, daß die Rücklaufsperre in der höchsten Stellung bzw. in der Blockierungsstellung gehalten wird. Die Rücklaufsperre soll das Zurücklaufen von Transportgut verhindern. Aus diesem Grund wird sie durch die Kraft einer Feder ständig in der höchsten Stellung gehalten. Dies ist dabei die Blockierungsstellung. Die Blockierungsstellung wird zum einen verlassen, wenn sich beispielsweise die Rücklaufsperre in dem Transportbereich befindet, wobei das Transportgut über diese Rücklaufsperre gleiten kann, indem sie sie herunterdrückt. Dies kann beispielsweise durch die Abschrägung der Rücklaufsperre in Transportrichtung geschehen. Nachdem das Transportgut die Rücklaufsperre passiert hat, wird dann durch die Kraft der Feder die Rücklaufsperre wieder in die Blockierungsstellung gedrückt.

In dem Moment, wo die Rücklaufsperre in einer Stoppeinheit oder aber auch in einer gesonderten Baugruppe angeordnet ist, indem die Stoppeinheit oder die Baueinheit aus dem Transportbereich herausgeschwenkt bzw. -genommen wird, bleibt die Rücklaufsperre ebenfalls in der höchsten Stellung, ist jedoch nicht in Eingriff zu bringen. Erst duch das Einbringen, Anheben bzw. Einschwenken der Stoppeinheit oder der die Rücklaufsperre tragenden Baueinheit ist es wieder möglich, die Rücklaufsperre in den Wirkungsbereich einzubringen. Die höchste Stellung bzw. die Blockierungsstellung wird jedoch automatisch immer wieder durch die Kraft der Feder gehalten.

Gemäß einer Weiterbildung der Erfindung ist es vorgesehen, daß die Rücklaufsperre als Bolzen ausgebildet ist, der in Transportrichtung einseitig steigend abgeschrägt ist, so daß in den Transportbereich einfahrendes Transportgut die Sperre aus dem Transportbereich drücken und passieren kann. Dies ist beispielsweise eine vorteilhafte Weiterbildung die verdeutlicht, wie das Passieren des Transportgutes in den Transportbereich bei in Wirkung befindlicher Rücklaufsperre realisiert werden kann. Für den Rücktransport des Transportgutes ist es dann erforderlich, die Rücklaufsperre bzw. die gesamte Stoppeinheit aus dem Transportbereich bzw. aus dem Wirkungsbereich in diesem Transportbereich herauszufahren bzw. herauszuschwenken oder herauszunehmen.

Die Rücklaufsperre ist vorteilhafterweise in Führungen geführt bzw. in Gleitlagern gelagert.

Um die Blockierungsaufgabe optimal erfüllen zu können, ist die Rücklaufsperre in Blockierungsrichtung mit wenigstens einer Blockierungsfläche versehen, die dann mit an dem Transportgut vorgesehenen, korrespondierend ausgebildeten Anlageflächen zusammenwirkt, wenn das Transportgut die Rücklaufsperre passiert hat und möglicherweise zurückgleiten will.

Erfindungsgemäß hat auch der Stopper eine entgegen der Transportrichtung angeordnete Stoppfläche. Diese fängt das Transportgut im Transportbereich auf und stoppt bzw. blockiert es. Dabei ist es weiter von Vorteil, daß der Stopper um eine Stopperachse schwenkbar bzw. drehbar gelagert ist. Dadurch ist es möglich, die Bewegungsenergie besser aufzufangen, als bei einer starren Anordnung des Stoppers. Durch die Schwenkung um die Stopperachse kann hier die Bewegungsenergie besser aufgefangen bzw. abgeleitet werden.

Dabei ist es von besonderem Vorteil, wenn ein Stoßdämpfer vorgesehen ist, der die Bewegungsenergie des an dem Stopper auflaufenden Transportgutes dämpft bzw. aufnimmt.

Die Erfindung ist dabei auf keine besondere Art bekannter Stoßdämpfer eingeschränkt, sondern es ist durchaus möglich hierzu Feder- bzw. federhydraulische Stoßdämpfer oder auch federpneumatische Stoßdämpfer einzusetzen.

Gemäß einer Weiterbildung der Erfindung ist es vorgesehen, daß die Arretierungsmöglichkeit durch einen Stift angegeben ist, der durch Bohrungen in dem Gehäuse und im längeren Schenkel des Kniehebelgelenks führbar ist, um das Kniegelenk in der abgeknickten Stellung zu blockieren. Dies ist eine sehr wirkungsvolle und einfache mechanische Möglichkeit, um das Kniegelenk zu blockieren. In dem Moment, wo das Kniegelenk blockiert ist, kann gleichzeitig der Antrieb für die Knickbewegung ausgeschaltet werden, was insgesamt zu einer nicht unerheblichen Energieeinsparung führt. Die Arretierungseinheit kann entsprechend einer vorteilhaften Weiterbildung der Erfindung selbstverständlich auch eine gesteuerte, insbesondere automatisch eingreifende Blockierungseinheit sein, die dann arretierend das Kniehebelgelenk bzw. die Stoppereinheit in der außerhalb des Wirkungsbereiches befindlichen Stellung hält.

Die Arretierungseinheit ist deshalb erforderlich, da in dem Moment, wo der Strom bzw. die Spannung oder der Druck an dem Antrieb für die Knickbewegung des Kniehebelgelenkes abgeschaltet wird, der Kraftspeicher in Form beispielsweise der Feder den Stopper wieder in die aktive Stellung zurückschiebt. Selbstverständlich würde der Kraftspeicher auch die gesamte Stoppeinheit in die aktive Stellung zurückschieben, wenn keine Blockierungseinrichtung vorgesehen ist und die Spannung bzw. der Strom oder der Druck abgeschaltet wird. Um Energie zu sparen ist also eine Arretierungsmöglichkeit sehr wirksam und sinnvoll.

Eine weitere Ausführungsform der Erfindung sieht vor, daß eine Schutzabdeckung für den zum Transportgut hinweisenden Teil der Stoppeinheit vorgesehen ist, die Stopper und/oder Rücklaufsperre dicht umschließt. Diese Schutzabdeckung ist beispielsweise in Transportbereichen, beispielsweise in Werkzeugmaschinen in der spanenden Bearbeitung oder in Transferstraßen mit spanenden Bearbeitungsmaschinen, vorgesehen. Durch die spanende Bearbeitung ist es möglich, daß Späne und Kühl- bzw. Schmierflüssigkeit den Stopper verunreinigen und damit die Wirksamkeit einschränken bzw. die Stoppfunktion vollständig außer Kraft setzen. Um dies zu vermeiden ist die Schutzabdeckung für den zum Transportgut weisenden Teil der Stoppeinheit oder aber der Rücklaufsperre, je nach dem ob sie in einer gemeinsamen Stoppeinheit oder in unterschiedlichen Baugruppen angeordnet sind, vorgesehen. Die Abdeckung dient in jedem Fall auch der Vermeidung von Verletzungen. Die Finger einer Bedienperson können beispielsweise jetzt nicht mehr in vorhandene Zwischenräume gelangen und verletzt werden.

Die Erfindung betrifft demnach auch eine Vorrichtung zum Stoppen von Transportgut, wie Werkstücke tragende Paletten oder dergleichen in einer Transportbahn, wie zum Beispiel einer Materialflußbahn oder in einer Transferstraße, mit einem Stopper, der in den durch die Wirkebene begrenzten Transportbereich des Transportgutes bringbar ist, welcher sich dadurch auszeichnet, daß der Stopper mit einer Schutzabdeckung versehen ist, die den Stopper zum Transportgut hin dicht umschließt. Dadurch wird es ermöglicht, daß zum einen die durch die Erfindung gestellte Aufgabe, nämlich den Transport eines Transportgutstromes in zwei Richtungen innerhalb einer Transportbahn, zu ermöglichen, gelöst wird und zum anderen wird gleichzeitig ein Stopper zur Verfügung gestellt, der in einem spanenden Bereich einer Werkzeugmaschine, beispielsweise ebenfalls zur Blockierung von Transportgütern oder Werkstücken oder dergleichen, einsetzbar ist, ohne befürchten zu müssen, daß die Funktion des Stoppers durch Verunreinigung mit Spänen oder durch die recht aggressiven Kühl- bzw. Schmierflüssigkeiten außer Funktion gesetzt wird.

Erfindungsgemäß ist es weiterhin vorgesehen, daß die Schutzabdeckung beweglich ausgebildet ist, derart, daß die Öffnung für Stopper und/oder Rücklaufsperre auch im abgesenkten bzw. ausgeschwenkten Zustand dicht umschlossen sind. Dazu ist es beispielsweise sinnvoll, daß die Anordnung so gewählt ist, daß die Abdeckung jeweils mit der Bewegung des Stoppers mitfährt.

Die erfindungsgemäße Vorrichtung zeichnet sich auch dadurch aus, daß sie mit wenigstens einem Sensor, vorzugsweise zwei Sensoren, zur Ermittlung der jeweiligen Stellung von Stopper und/oder Rücklaufsperre und/oder Stoppeinheit ausgerüstet ist. Durch die Sensoren wird jeweils die Stellung des Stoppers bzw. der Rücklaufsperre und/oder Stoppeinheit angezeigt, wobei der Sensor diese Signale an eine Steuerung der gesamten Transportbahn weiter gibt. Somit läßt sich die erfindungsgemäße Vorrichtung auch in vollautomatisch laufenden Transportbahnen, Transferstraßen oder dergleichen problemlos einsetzen.

Eine Weiterbildung der Erfindung zeichnet sich dadurch aus, daß der oder die Sensoren beidseitig am Gehäuse angeordnet sind. Damit werden Fehlerquellen besser vermieden, als dies bei nur einer einseitigen Anordnung gegeben wäre.

Eine weitere Ausführungsform der Erfindung zeichnet sich dadurch aus, daß Stopper und Rücklaufsperre in einer gemeinsamen Stoppeinheit angeordnet sind, die in einem Gehäuse angeordnet und über einen Drehpunkt dreh- bzw. schwenkbar ist, der Stopper an einer im Gehäuse vorgesehen Stopperachse gelagert ist, wobei ein Stoßdämpfer zwischen Stopper und Gehäuse wirkt, das Kniehebelgelenk mit dem kürzeren Schenkel an der Stopperachse und mit dem längeren Schenkel an der Schenkelachse beweglich gelagert ist und das die Schenkel verbindende Gelenk von einer im Gehäuse gelagerten Feder mit einer Federkraft beaufschlagt ist, die Stopper und Rücklaufsperre in dem Transportbereich hält, an dem längeren Schenkel ein als Elektromagnet ausgebildeter Antrieb angreift, der die Knickbewegung des Kniehebelgelenks bewirkt und dadurch Stopper und Rücklaufsperre bzw. die gemeinsame Stoppeinheit aus dem Transportbereich wegbringt und eine Arretierungsmöglichkeit am längeren Schenkel und am Gehäuse zur Blockierung des Kniehebelgelenks in der abgeknickten Stellung vorgesehen ist. Diese spezielle Ausführungsform ist nur eine vorteilhafte Weiterbildung nach der Erfindung. Die Erfindung ist keineswegs auf diese Ausführungsform eingeschränkt, obwohl es sich dabei um eine recht einfache elektromechanische Lösung handelt, die bisher bekannte, sehr aufwendige Lösungen aus dem Stand der Technik kompensieren kann.

Zusammenfassend entstehen durch die erfindungsgemäße Vorrichtung folgende Vorteile:
- automatischer Vor- und Rücklauf des Transportgutes für einen Reversierbetrieb,
- einfache manuelle Rücksteuerungsmöglichkeit,
- problemlose Arretierungsmöglichkeit des Stoppers und der Rücklaufsperre für einen Durchlauf des Transportgutes in beide Richtungen,
- absoluter Unfallschutz, insbesondere Fingerschutz durch die integrierte Schutzabdeckung, wobei keine zusätzlichen Schutzelemente benötigt werden,
- Zugänglichkeit und Anschluß von beidseitig angeordneten Sensoren ist verbessert,
- alle Elemente der Vorrichtung sind zwangsgeführt und die beweglichen Teile sind gelagert,
- Einsatz der Vorrichtung in spanabhebenden Bearbeitungsstationen bzw. Transferlinien.

Die Erfindung betrifft auch eine Transportbahn, Materialflußbahn oder Transferstraße, mit wenigstens einer Vorrichtung wie zuvor beschrieben.

Eine Weiterbildung der erfindungsgemäßen Transportbahn zeichnet sich dadurch aus, daß wenigstens zwei Vorrichtungen vorgesehen sind, die in entgegengesetzter Richtung wirkend angeordnet sind. Durch diese Ausführungsform ist es möglich, daß Transportgüter in beiden Richtungen gestoppt und gehalten werden können, wobei auch ein Rücklauf in die jeweilige Richtung, aus der das Transportgut herantransportiert, durch diese Form der Anordnung der Vorrichtungen verhindert werden kann. Dadurch, daß beide Vorrichtungen, wie zuvor beschrieben, aus dem Transportbereich bringbar, heraussteuerbar bzw. herausschwenkbar sind, kann universell die Transportbahn in beide Richtungen zur Vereinzelung von Transportgütern eingesetzt werden.

Die Erfindung wird nachfolgend anhand von Ausführungsbeispielen und Zeichnungen weiter beschrieben.

Es zeigen:
- Fig. 1: eine Vorrichtung nach der Erfindung in Wirkstellung mit entgegen der Transportrichtung abgewinkeltem Stopper,
- Fig. 2: eine Vorrichtung nach Fig. 1 mit aufgenommenem Transportgut,
- Fig. 3: eine Vorrichtung nach Fig. 1 und 2 mit abgesenkter Stoppeinheit.

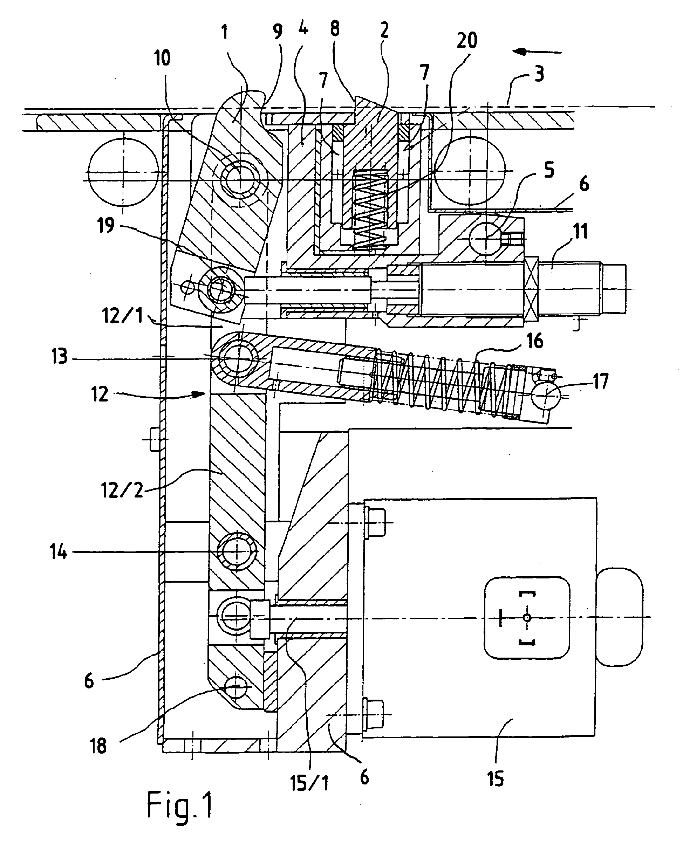

Die Fig. 1 zeigt eine erfindungsgemäße Vorrichtung, bei welcher der Stopper sich in einer abgewinkelten, zum Auffangen eines Transportgutes bereiten Stellung befindet. Der Stopper ist mit dem Bezugszeichen 1 bezeichnet. Der Stopper 1 ist dabei um eine Stopperachse 10 schwenkbar gelagert. Im unteren Bereich des Stoppers ist die Dämpferachse vorgesehen, an welcher ein Stoßdämpfer schwenkbar gelagert ist und angreift. Der Stoßdämpfer 11 ist dabei an dem Drehpunkt 5 der gesamten Stoppeinheit 4 angeordnet. In der Stoppeinheit 4 ist sowohl der Stopper 1 als auch die Rücklaufsperre 2 angeordnet. Die Rücklaufsperre 2 ist federgelagert und in Führungen 7 geführt. Die Feder 20 hält dabei die Rücklaufsperre in der jeweils oberen, angehobenen und für einen Wirkeingriff vorgesehenen Stellung. Die Rücklaufsperre ist in der dargestellten Ausführungsform beispielsweise als Bolzen ausgebildet, der in Transportrichtung einseitig steigend abgeschrägt ist, so daß in den Transportbereich 3 einfahrendes Transportgut die Sperre aus dem Transportbereich 3 drücken und die Sperre passieren kann. Nachdem das Transportgut die Rücklaufsperre 2 passiert hat, wird sie an den Stopper 1 anstoßen, der dann um die Stopperachse 10 geschwenkt wird und das Transportgut blockiert. Der Stoßdämpfer 11 fängt dabei die Bewegungsenergie des Transportgutes, welches über den Stopper 1 auf den Stoßdämpfer 11 übertragen wird, auf. Der Stoßdämpfer selbst ist ebenfalls an dem Drehpunkt 5 der gesamten Stoppeinheit und an der Dämpferachse 19, welche sich am Stopper 1 befindet, drehbar gelagert, so daß insgesamt die Stoppeinheit 4 schwenkbar ausgebildet ist und gleichzeitig auch die notwendige Beweglichkeit für den Stoßdämpfer 11 vorhanden ist.

Um die Stoppeinheit 4, bestehend aus Stopper 1 und Rücklaufsperre 2 sowie in der Ausführungsform ebenfalls noch durch den Stoßdämpfer 11 komplettiert, aus dem Wirkungsbereich bzw. aus dem Transportbereich 3 wegzubringen, muß die gesamte Stoppeinheit 4 der Ausführungsform gemäß der Fig. 1 abgesenkt werden. Dies geschieht mit Hilfe eines Kniehebelgelenks 12. Das Kniehebelgelenk 12 ist gebildet aus dem kurzen Schenkel 12/1, welcher an der Stopperachse 10 drehbar gelagert ist, und aus dem längeren Schenkel 12/2, der an der Schenkelachse 14 drehbar bzw. schwenkbar gelagert ist. Beide Schenkel 12/1 und 12/2 sind an dem Gelenk 13 miteinander verbunden. Um das Kniehebelgelenk 12 in eine abgewinkelte Stellung zu versetzen, ist ein als Elektromagnet ausgebildeter Antrieb 15 vorgesehen, der am längeren Schenkel 12/2 angreift, derart, daß der Stellbolzen 15/1 den längeren Schenkel 12/2 um die Schenkelachse 14 bewegt. Dies geschieht beispielsweise durch Herausfahren des Stellbolzens 15/1 aus dem Antrieb 15. Gemäß der Darstellung wird der Stellbolzen 15/1 nach links gedrückt, so daß das Kniehebelgelenk 12 in eine abgewinkelte Stellung gelangt. Durch die Abwinkelung des Kniehebelgelenks 12 wird die gesamte Stoppeinheit 4 um den Drehpunkt 5 dieser Einheit geschwenkt, so daß sie sich dann außerhalb des Transportbereiches 3 mit beiden Wirkungselementen, nämlich der Rücklaufsperre 2 und dem Stopper 1, befindet. An dem Gelenk 13 ist eine Rückstellfeder 16 drehbar bzw. schwenkbar angeordnet. Die Rückstellfeder 16 ist gleichzeitig an einer Federachse 17 schwenkbar aufgehängt bzw. gelagert, so daß für den Knickvorgang die Federkraft der Feder entgegen der Bewegungsrichtung des Knickvorganges wirkt und die Feder 16 durch ihre Federkraft versucht, das gesamte Knickhebelgelenk 12 in die gestreckte Stellung zurückzudrücken. Dies wird durch die Kraft des elektromagnetischen Antriebes 15 solange verhindert, wie dieser mit Spannung bzw. Strom beaufschlagt ist. Um zu vermeiden, daß der Elektromagnet dauernd unter Spannung gehalten werden muß, wenn die Stoppeinheit 4 außerhalb des Transportbereiches 3 gehalten wird, ist eine Arretierungsmöglichkeit vorgesehen, die beispielsweise derart ausgestaltet ist, daß in dem Gehäuse 6 nicht dargestellte Bohrungen vorgesehen sind, durch die ein ebenfalls nicht dargestellter Stift in der abgewinkelten Stellung durch die Bohrung 18 des langen Schenkels 12/2 hindurchgeschoben wird. Durch diese einfache mechanische Blockierungseinrichtung wird verhindert, daß die Kraft der Feder 16 das Kniehebelgelenk 12 in die gestreckte Stellung zurückbringt. Für ein Hereinschwenken der Stoppeinheit 4 in den Transportbereich 3 genügt es dann, den nicht dargestellten Stift aus der Bohrung 18 und den dazu korrespondierend angeordneten Bohrungen im Gehäuse 6 zu ziehen.

An der Rücklaufsperre 2 ist eine Blockierungsfläche 8 vorgesehen, die senkrecht abfallend dargestellt ist und mit der Form des Transportgutes korrespondiert, so daß ein Zurücklaufen des Transportgutes in der Wirkstellung verhindert wird. Die Abschrägung der Rücklaufsperre 2 in Transferrichtung steigend ermöglicht jedoch das Herunterdrücken der Sperre. An dem Stopper 1 ist ebenfalls eine Stoppfläche 9 vorgesehen, gegen die das Transportgut mit dazu ebenfalls korrespondierend ausgebildeten Anlageflächen anläuft.

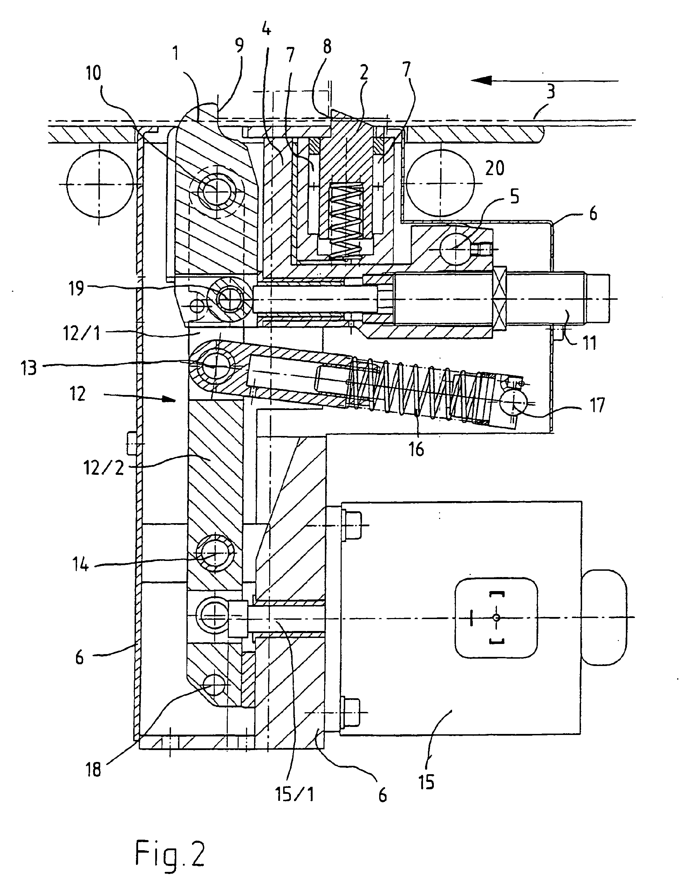

Die Fig. 2 zeigt die gleiche Vorrichtung, wie sie in der Fig. 1 bereits ausführlich beschrieben wurde. Im Unterschied zur Fig. 1 ist hierbei der Stopper 1 in einer senkrechten Stellung. Dies ist dadurch begründet, daß schematisch mit gestrichelter Linie angedeutet das Transportgut bzw. ein Aufnahmeteil einer Palette oder dergleichen jetzt durch den Stopper 1 gestoppt wurde und durch die Rücklaufsperre 2 gehalten wird. Alle anderen Merkmale wurden bereits ausführlich im Fig. 1 beschrieben, so daß auf eine erneute Vorstellung verzichtet wird.

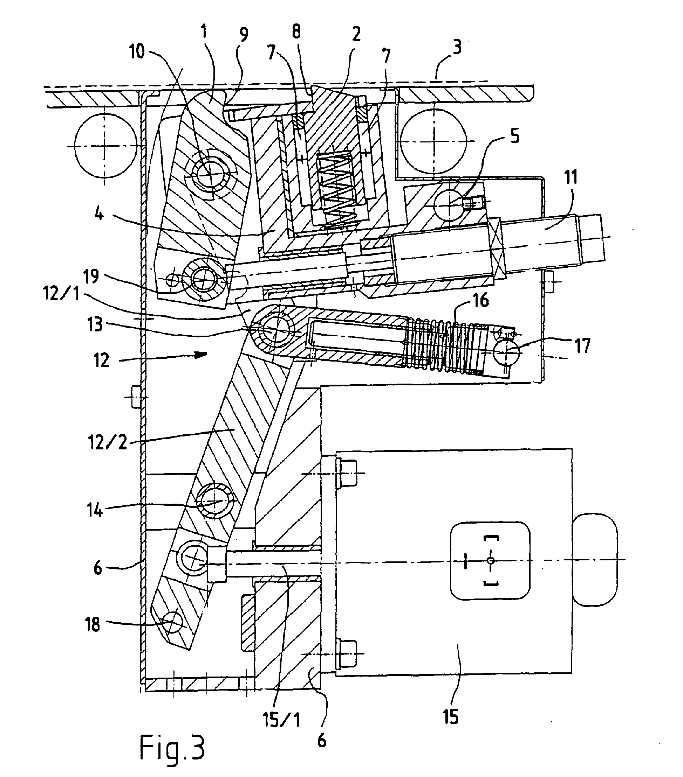

Die Fig. 3 zeigt die Vorrichtung gemäß der Fig. 1 und 2, derart, daß sich das Kniehebelgelenk 12 in einer abgewinkelten Stellung befindet. Der Stellbolzen 15/1 des Antriebes 15 ist dabei herausgefahren, so daß der längere Schenkel 12/2 nach links weggedrückt wurde. Über das Gelenk 13 wird ebenfalls der kürzere Schenkel 12/1 angesteuert und bewirkt, daß sich die Stoppeinheit um den Drehpunkt 5 nach unten senkt. Die Rückstellfeder 16, welche am Gelenk angesteuert ist, ist in dieser Ausführungsform zusammengedrückt, so daß für den Fall, das der Stromfluß des Elektromagneten unterbrochen wird, die Feder die beiden Schenkel 12/1 und 12/2 des Kniehebelgelenks 12 wieder in eine gestreckte Stellung versetzen würde, wenn dies nicht durch eine entsprechende Arretierungs- oder Blockierungseinrichtung verhindert wird. Dies wurde ebenfalls bereits ausführlich bei der Beschreibung der Fig. 1 beschrieben, so daß auf eine Wiederholung ebenfalls verzichtet wird.

## Patentansprüche

1. Vorrichtung zum Stoppen von Transportgut, wie Werkstücke tragende Paletten oder dergleichen in einer Transportbahn, wie z.B. einer Materialflussbahn oder in einer Transferstraße, insbesondere zur Vereinzelung des Transportgutstromes, bestehend aus wenigstens einer Rücklaufsperre und einem Stopper, wobei der Stopper in den durch die Wirkebene der Transportbahn begrenzten Transportbereich des Transportgutes bringbar ist und die Rücklaufsperre den Transportgutfluss entgegen der Transportrichtung zu blockieren vermag, wobei Stopper (1) und Rücklaufsperre (2) aus dem Transportbereich (3) wegbringbar sind und wobei eine Stopperachse (10) vorgesehen ist, die mit dem Stopper (1) mitbewegt wird, **dadurch gekennzeichnet, daß** zum Ein- beziehungsweise Ausbringen des Stoppers (1) in beziehungsweise aus dem Transportbereich (3) ein Kniehebelgelenk (12), bestehend aus einem kurzen und einem längeren Schenkel, vorgesehen ist, die Schenkel über ein Gelenk (13) verbunden sind, der kürzere Schenkel (12/1) an der Stopperachse (10) und der längere Schenkel (12/2) an einer von dem Transportbereich (3) weiter als die Stopperachse (10) beabstandet vorgesehenen Schenkelachse (14) beweglich gelagert sind.

2. Vorrichtung nach Anspruch 1, **dadurch gekennzeichnet, daß** die Ansteuerung von Stopper (1) und Rücklaufsperre (2) an dem längeren Schenkel (12/2) des Kniehebelgelenkes vorgesehen ist und/oder die Ansteuerung am Gelenk (13) vorgesehen ist.

3. Vorrichtung nach einem oder beiden der vorhergehenden Ansprüche, **dadurch gekennzeichnet, daß** ein Antrieb (15) für die Knickbewegung des Kniehebelgelenks (12) vorgesehen ist, der am längeren Schenkel (12/2) des Kniehebelgelenkes (12) angreift und/oder als Antrieb (15) ein Zug- bzw. Stellmagnet, ein elektrischer, hydraulischer bzw. pneumatischer Stellantrieb vorgesehen ist und/oder als Zug- bzw. Stellmagnet ein Elektromagnet mit entgegen der Zugkraft wirkend angeordneter Feder ausgestattet ist.

4. Vorrichtung nach einem der vorhergehenden Ansprüche, **dadurch gekennzeichnet, daß** eine Rückstellfeder (16) vorgesehen ist, die am Gelenk (13) des Kniehebelgelenkes (12) angreift, die an einer Federachse (17) drehbar bzw. schwenkbar gelagert ist und deren Federkraft entgegen der zugkraft bzw. Schubkraft des Antriebs (15) wirkt.

5. Vorrichtung nach einem der vorhergehenden Ansprüche, **dadurch gekennzeichnet, daß** eine Arretierungsmöglichkeit vorgesehen ist, um die Stoppeinheit (4) in der abgesenkten, ausgeschwenkten bzw. herausgefahrenen Stellung zu halten und/oder die Arretierungsmöglichkeit durch einen Seift angegeben ist der durch Bohrungen (18) in dem Gehäuse und im längeren Schenkel (12/2) führbar ist, um das Kniehebelgelenk (12) zu blockieren und/oder als Arretierungseinheit eine gesteuerte, insbesondere automatisch eingreifende Blockierungseinheit vorgesehen ist.

6. Vorrichtung nach einem der vorhergehenden Ansprüche, **dadurch gekennzeichnet, daß** Stopper (1) und Rücklaufsperre (2) ansteuerbar, insbesondere gemeinsam ansteuerbar ausgebildet sind.

7. Vorrichtung nach einem der vorhergehenden Ansprüche, **dadurch gekennzeichnet, daß** Stopper (1) und Rücklaufsperre (2) gemeinsam bzw. gleichzeitig aus dem Transportbereich (3) wegbringbar sind.

8. Vorrichtung nach einem der vorhergehenden Ansprüche, **dadurch gekennzeichnet, daß** Stopper (1) und Rücklaufsperre (2) in unterschiedlichen, voneinander getrennten Baugruppen angeordnet sind.

9. Vorrichtung nach einem der vorhergehenden Ansprüche, **dadurch gekennzeichnet, daß** Stopper (1) und Rücklaufsperre (2) in einer gemeinsamen Stoppeinheit (4) angeordnet sind und/oder die Stoppeinheit (4) um einen Drehpunkt (5) drehbar bzw. schwenkbar angeordnet ist, derart, daß sie insgesamt in den Transportbereich (3) der Transportbahn ein- bzw. ausschwenkbar ist und/oder die Stoppeinheit (4) ein Gehäuse (6) aufweist und/oder die Stoppeinheit (4) unterhalb des Transportbereichs (3) angeordnet ist und/oder die Stoppeinheit (4) hängend bzw. oberhalb des Transportbereichs (3) angeordnet ist und/oder die Stoppeinheit (4) seitlich neben dem Transportbereich (3) angeordnet ist.

10. Vorrichtung nach einem der vorhergehenden Ansprüche, **dadurch gekennzeichnet, daß** die Rücklaufsperre (2) federgelagert ist, derart, daß die Rücklaufsperre (2) in der höchsten Stellung bzw. in der Blockierungsstellung gehalten wird und/oder die Rücklaufsperre (2) als Bolzen ausgebildet ist, der in Transportrichtung einseitig steigend abgeschrägt ist, so daß in den Transportbereich (3) einfahrendes Transportgut die Sperre aus dem Transportbereich (3) drücken und passieren kann und/oder die Rücklaufsperre (2) in Führungen (7) geführt bzw. in Gleitlagern gelagert ist und/oder die Rücklaufsperre (2) in Blockierungsrichtung wenigstens eine Blockierungsfläche (8) aufweist, die mit an dem Transportgut vorgesehenen, korrespondierend ausgebildeten Anlageflächen zusammenwirkt.

11. Vorrichtung nach einem der vorhergehenden Ansprüche, **dadurch gekennzeichnet, daß** der Stopper (1) eine entgegen der Transportrichtung angeordnete Stoppfläche (9) aufweist, die das Transportgut im Transportbereich (3) auffängt und stoppt bzw. blockiert und/oder der Stopper (1) um die Stopperachse (10) schwenkbar bzw. drehbar gelagert ist.

12. Vorrichtung nach einem der vorhergehenden Ansprüche, **gekennzeichnet durch** einen Stoßdämpfer (11) für die Bewegungsenergie des an dem Stopper (1) auflaufenden Transportgutes und/oder der Stoßdämpfer (11) ein feder-/hydraulischer Stoßdämpfer oder ein feder-/pneumatischer Stoßdämpfer ist.

13. Vorrichtung nach einem der vorhergehenden Ansprüche, **dadurch gekennzeichnet, daß** eine Schutzabdeckung für den zum Transportgut weisenden Teil der Stoppeinheit (4) vorgesehen ist, die Stopper (1) und/oder Rücklaufsperre (2) dicht umschließt.

14. Vorrichtung nach einem der vorhergehenden Ansprüche, **dadurch gekennzeichnet, daß** der Stopper (1) mit einer Schutzabdeckung versehen ist, die den Stopper (1) zum Transportgut hin dicht umschließt.

15. Vorrichtung nach Anspruch 14, **dadurch gekennzeichnet, daß** die Schutzabdeckung beweglich ausgebildet ist, derart, daß die Öffnungen für Stopper (1) und/oder Rücklaufsperre (2) auch im abgesenkten Zustand dicht umschlossen sind.

16. Vorrichtung nach einem der vorhergehenden Ansprüche, **dadurch gekennzeichnet, daß** wenigstens ein Sensor, vorzugsweise zwei Sensoren, zur Ermittlung der jeweiligen Stellung von Stopper (1) und/oder Rücklaufsperre (2) und/oder Stoppeinheit (4) vorgesehen ist und/oder der oder die Sensoren beidseitig am Gehäuse angeordnet sind.

17. Vorrichtung nach einem der vorhergehenden Ansprüche, **dadurch gekennzeichnet, daß** Stopper (1) und Rücklaufsperre (2) in einer gemeinsamen Stoppeinheit (4) angeordnet sind, die in einem Gehäuse (6) angeordnet und über einen Drehpunkt (5) dreh- bzw. schwenkbar ist, der Stopper (1) an einer im Gehäuse (6) vorgesehenen Stopperachse (10) gelagert ist, wobei ein Stoßdämpfer (11) zwischen Stopper (1) und Gehäuse (6) wirkt, das Kniehebelgelenk (12) mit dem kürzeren Schenkel (12/1) an der Stopperachse (10) und mit dem längeren Schenkel (12/2) an der Schenkelachse (14) beweglich gelagert ist und das die Schenkel verbindende Gelenk (13) von einer im Gehäuse (6) gelagerten Feder (16) mit einer Federkraft beaufschlagt ist, die Stopper (1) und Rücklaufsperre (2) in dem Transportbereich (3) hält, an dem längeren Schenkel (12/2) ein als Elektromagnet ausgebildeter Antrieb (15) angreift, der die Knickbewegung des Kniehebelgelenkes (12) bewirkt und dadurch Stopper (1) und Rücklaufsperre (2) bzw. die gemeinsame Stoppeinheit (4) aus dem Transportbereich (3) wegbringt und eine Arretierungsmöglichkeit am längeren Schenkel (12/2) und Gehäuse (6) zur Blockierung des Kniehebelgelenkes (12) in der abgeknickten Stellung vorgesehen ist.

18. Transportbahn, Materialflussbahn oder Transferstraße mit wenigstens einer Vorrichtung nach einem der vorhergehenden Ansprüche.

19. Transportbahn, Materialflussbahn oder Transferstraße nach Anspruch 18, **dadurch gekennzeichnet, daß** wenigstens zwei Vorrichtungen vorgesehen sind, die in entgegengesetzter Richtung wirkend angeordnet sind.

## Claims

1. Device for stopping conveyed goods, like pallets carrying work pieces or the like, in a conveyor line, like for example a material handling line or in a transfer line, in particular for decollating the stream of the conveyed goods, comprising at least one return stop and a stopper wherein the stopper can be brought in the conveying area of the conveyed goods restricted by the active plane of the conveyor line, and the return stop can block the stream of the conveyed goods in opposite direction of conveying, wherein stopper (1) and return stop (2) can be removed from the conveying area (3), and wherein a stopper axis (10) is provided which can move together with the stopper (1), **characterised in that** for introducing or removing the stopper (1) in or from the conveying area (3) a toggle joint (12), comprising a short and a longer leg, is provided, the legs are connected via a joint (13), the shorter leg (12/1) is supported moving at the stopper axis (10) and the longer leg (12/2) at the leg axis (14) spaced more apart from the conveying area (3) than the stopper axis (10).

2. Device according to claim 1, **characterised in that** the selecting of stopper (1) and return stop (2) is provided at the longer leg (12/2) of the toggle joint, and/or the selecting is provided at the joint (13).

3. Device according to one or both of the preceding claims, **characterised in that** a drive (15) is provided for the buckling movement of the toggle joint (12) which engages at the longer leg (12/2) of the toggle joint (12), and/or as drive (15) a pull-type electromagnet or operating magnet, an electric, hydraulic or pneumatic actuating drive is provided, and/or as pull-type electromagnet or operating magnet an electromagnet is equipped with a spring arranged acting against the tensile force.

4. Device according to one of the preceding claims, **characterised in that** a readjusting spring (16) is provided engaging at the joint (13) of the toggle joint (12), supported rotating or swivelling at a spring axis (17), and the spring power of which acts against the tensile force or shearing force of the drive (15).

5. Device according to one of the preceding claims, **characterised in that** a lock is provided in order to hold the stopping unit (4) in the lowered, swung out or extended position, and/or the lock is defined by a pin which can be guided through borings (18) in the housing and in the longer leg (12/2) in order to block the toggle joint (12), and/or as locking unit a controlled, in particular an automatically engaging blocking unit is provided.

6. Device according to one of the preceding claims,
**characterised in that** stopper (1) and return stop (2) are designed in such a way that they could be selected, in particular selected together.

7. Device according to one of the preceding claims, **characterised in that** stopper (1) and return stop (2) can be removed together or at the same time from the conveying area (3).

8. Device according to one of the preceding claims, **characterised in that** stopper (1) and return stop (2) are arranged in different structural components separated from each other.

9. Device according to one of the preceding claims, **characterised in that** stopper (1) and return stop (2) are arranged in a common stopping unit (4), and/or the stopping unit (4) is arranged rotating or swivelling around a pivot (5) in such a way that it can be swivelled in or out of the conveying area (3) of the conveyor line altogether, and/or the stopping unit (4) has a housing (6), and/or the stopping unit (4) is arranged below the conveying area (3), and/or the stopping unit (4) is arranged suspended or above the conveying area (3), and/or the stopping unit (4) is arranged at the side of the conveying area (3).

10. Device according to one or more of the preceding claims, **characterised in that** the return stop (2) is supported on springs in such a way that the return stop (2) is held in the uppermost position or the blocking position, and/or the return stop (2) is designed as bolt which is bevelled rising one-sided in the direction of conveyance so that conveyed goods entering the conveying area (3) push the stop out of the conveying area (3) and can pass, and/or the return stop (2) is guided in guides (7) or supported in slide bearings, and/or the return stop (2) has at least one blocking surface (8) in blocking direction interacting with the correspondingly designed contact surfaces provided at the conveyed goods.

11. Device according to one of the preceding claims, **characterised in that** the stopper (1) has a stopping surface (9) arranged in opposite direction of conveyance catching and stopping or blocking the conveyed goods in the conveying area (3), and/or the stopper (1) is supported swivelling or rotating around the stopper axis (10).

12. Device according to one of the preceding claims, **characterised by** a shock absorber (11) for the momentum of the conveyed goods accumulating at the stopper (1), and/or that the shock absorber (11) is a spring/hydraulic shock absorber or a spring/pneumatic shock absorber.

13. Device according to one of the preceding claims, **characterised in that** a protective cover is provided for the part of the stopping unit (4) facing the conveyed goods enclosing stopper (1) and/or return stop (2) snugly.

14. Device according to one of the preceding claims, **characterised in that** the stopper (1) is provided with a protective cover enclosing the stopper (1) snugly toward the conveyed goods.

15. Device according to claim 14, **characterised in that** the protective cover is designed moving in such a way that the opening for stopper (1) and/or return stop (2) are enclosed snugly even in lowered position.

16. Device according to one of the preceding claims, **characterised in that** at least one sensor, preferably two sensors, are provided for determining the respective position of stopper (1) and/or return stop (2) and/or stopping unit (4), and/or the sensor(s) are arranged on both sides of the housing.

17. Device according to one of the preceding claims, **characterised in that** stopper (1) and return stop (2) are arranged in a common stopping unit (4) which is arranged in a housing (6) and can be rotated or swivelled around a pivot (5), the stopper (1) is supported at a stopper axis (10) provided in the housing (6), a shock absorber (11) acting between stopper (1) and housing (6), the toggle joint (12) being supported moving with the shorter leg (12/1) at the stopper axis (10) and with the longer leg (12/2) at the leg axis (14), and the joint (13) connecting the legs is impinged by a spring (16) supported in the housing (6) with spring power keeping stopper (1) and return stop (2) in the conveying area (3), at the longer leg (12/2) a drive (15) designed as electromagnet engages which effects the buckling movement of the toggle joint (12), and thus removes stopper (1) and return stop (2) or the common stopping unit (4) from the conveying area (3), and a lock is provided at the longer leg (12/2) and housing (6) for blocking the toggle joint (12) in buckled position.

18. Conveyor line, material handling line or transfer line with at least one device according to one of the preceding claims.

19. Conveyor line, material handling line or transfer line according to claim 18, **characterised in that** at least two devices are provided arranged acting in opposite directions.

## Revendications

1. Dispositif destiné à arrêter le transport d'objets, tels des palettes supportant des pièces à usiner ou des objets similaires, par exemple sur un convoyeur ou une ligne de transfert, en particulier afin de singulariser le flux des objets transportés, comportant au moins un élément de blocage anti-retour et une butée, l'élément de blocage anti-retour permettant de bloquer le mouvement de transport en direction inverse et la butée pouvant être introduite dans la zone de mouvement des objets transportés limitée au champ d'action du convoyeur, ces deux dispositifs, la butée (1) et l'élément de blocage anti-retour (2) pouvant être retirés de la zone de transport (3) et l'axe de rotation (10) de la butée pouvant être déplacé avec la butée (1), **caractérisé en ce que** le mouvement d'entrée ou de sortie de la butée (1) dans ou de la zone de transport (3) est effectué à l'aide d'une genouillère (12) comportant un levier court, un levier long et une articulation (13) liant les deux leviers, le levier le plus court (12/1) étant fixé de façon mobile à l'axe (10) de la butée et le levier le plus long (12/2) étant fixé de façon mobile à un axe (14) situé au-delà de la distance entre la zone de transport (3) et l'axe de la butée (10).

2. Dispositif selon la revendication 1, **caractérisé en ce que** la commande de la butée (1) et de l'élément de blocage anti-retour (2) est située au niveau du levier le plus long (12/2) de la genouillère et/ou au niveau de l'articulation (13).

3. Dispositif selon une ou deux des revendications précédentes, **caractérisé en ce qu'**une commande (15) est prévue pour le mouvement de basculement de la genouillère (12) en agissant sur le levier le plus long (12/2) et/ou en ce que la commande (15) est un aimant travaillant en poussant ou en tirant ou un moteur électrique, hydraulique ou pneumatique et/ou **en ce que** l'aimant travaillant en poussant ou en tirant est un aimant électrique comportant un ressort agissant contre la force de l'aimant.

4. Dispositif selon une des revendications précédentes, **caractérisé en ce qu'**un ressort de rappel (16) agissant au niveau de l'articulation (13) de la genouillère (12) est maintenu de façon à pouvoir pivoter et basculer selon l'axe du ressort (17) et dont la force agit contre la force de poussée ou de traction de la commande (15).

5. Dispositif selon une des revendications précédentes, **caractérisé en ce qu'**il existe un moyen de blocage permettant d'immobiliser la butée (4) en position abaissée, déplacée ou pivotée vers l'extérieur et/ou **en ce que** le moyen de blocage est une goupille pouvant traverser des perçages (18) du châssis et du levier le plus long (12/2) afin de bloquer la genouillère (12) et/ou **en ce que** le moyen de blocage est une unité de blocage pilotée et en particulier agissant automatiquement.

6. Dispositif selon une des revendications précédentes, **caractérisé en ce que** la butée (1) et l'élément de blocage anti-retour (2) peuvent être commandés et en particulier l'étant les deux ensembles.

7. Dispositif selon une des revendications précédentes, **caractérisé en ce que** la butée (1) et l'élément de blocage anti-retour (2) peuvent être retirés ensemble et simultanément de la zone de transport (3).

8. Dispositif selon une des revendications précédentes, **caractérisé en ce que** la butée (1) et l'élément de blocage anti-retour (2) sont situés dans des sous-ensembles de construction différentes et séparés.

9. Dispositif selon une des revendications précédentes, **caractérisé en ce que** la butée (1) et l'élément de blocage anti-retour sont intégrés dans une unité d'arrêt (4) et/ou en ce **en ce que** l'unité d'arrêt (4) est articulée autour d'un point de rotation (5) de façon à pouvoir être pivotée vers ou en dehors la zone de transport (3) du convoyeur et/ou **en ce que** l'unité d'arrêt (4) possède un châssis (6) et/ou **en ce que** l'unité d'arrêt (4) est située en dessous de la zone de transport (3) et/ou **en ce que** l'unité d'arrêt (4) est suspendue au-dessus de la zone de transport (3) et/ou **en ce que** l'unité d'arrêt (4) est située à côté de la zone de transport (3).

10. Dispositif selon une des revendications précédentes, **caractérisé en ce que** l'élément de blocage anti-retour (2) est monté sur ressort de façon à ce qu'il soit maintenu dans la position la plus haute ou dans la position de blocage et/ou **en ce que** l'élément de blocage anti-retour (2) est une tige dont la face supérieure est coupée en biais en direction de transport de façon à ce que des objets transportés entrant dans la zone de transport passent l'élément de blocage anti-retour en le poussant en dehors de la zone de transport (3) et/ou **en ce que** l'élément de blocage anti-retour (2) est maintenu dans des guides (7) ou des paliers coulissants et/ou **en ce que** l'élément de blocage anti-retour (2) comporte au moins une face de blocage (8) en direction de blocage, agissant sur des faces d'appui correspondant, situées sur des objets transportés.

11. Dispositif selon une des revendications précédentes, **caractérisé en ce que** la butée (1) comporte une surface d'appui (9) faisant face à la direction de transport et arrête et immobilise les objets transportés au niveau de la zone de transport (3) et/ou **en ce que** la butée (1) peut pivoter ou tourner autour de son axe (10).

12. Dispositif selon une des revendications précédentes, **caractérisé en ce qu'**un amortisseur (11) sert à amortir l'énergie cinétique des objets transportés immobilisés par la butée (1) et/ou **en ce que** l'amortisseur (11) est un amortisseur à ressort et hydraulique ou un amortisseur à ressort et pneumatique.

13. Dispositif selon une des revendications précédentes, **caractérisé en ce qu'**il existe un cache de protection de la butée (4) du côté de l'arrivée des objets transportés enfermant de façon étanche la butée (1) et/ou l'élément de blocage anti-retour (2).

14. Dispositif selon une des revendications précédentes, **caractérisé en ce que** la butée (1) comporte un cache la protégeant du côté des objets transportés de façon étanche.

15. Dispositif selon la revendication 14, **caractérisé en ce que** le cache de protection est mobile de façon à ce que les ouvertures prévues pour la butée (1) et/ou l'élément de blocage anti-retour (2) sont fermé(e)s de façon étanche même lorsque ces éléments sont abaissés.

16. Dispositif selon une des revendications, **caractérisé en ce qu'**au moins un capteur et de préférence deux déterminent les positions de la butée (1) et/ou de l'élément de blocage anti-retour (2) et/ou de l'unité d'arrêt (4) et/ou **en ce que** le ou les capteurs sont situés de chaque côté du châssis.

17. Dispositif selon une des revendications précédentes, **caractérisé en ce que** la butée (1) et l'élément de blocage anti-retour (2) sont situés à l'intérieur d'un châssis (6) dans une unité d'arrêt commune (4) mobile autour d'un point de rotation (5), le dispositif comportant une butée (1) maintenue par un axe de butée (10) fixé au châssis (6), un amortisseur (11) situé entre la butée (1) et le châssis (6), une genouillère (12) maintenue de façon mobile par l'axe (10) de la butée au niveau du levier le plus court (12/1) et par l'axe (14) au niveau du levier le plus long (12/2), une articulation (13) assemblant les deux leviers et étant sous l'effet d'un ressort (16) maintenu par le châssis (6) qui retient - la butée (1) et l'élément de blocage anti-retour (2) dans la zone de transport (3), une commande (15) sous forme d'un électro-aimant agissant sur le levier le plus long (12/2), permettant alors d'effectuer le pivotement de la genouillère (12) et poussant ainsi la butée (1) et l'élément de blocage anti-retour (2) voire l'unité d'arrêt commune (4) en dehors de la zone de transport (3) puis finalement un moyen de blocage fixé au levier le plus long (12/2) et au châssis (6), permettant d'immobiliser la genouillère (12) dans la position pivotée.

18. Convoyeur, transporteur de matériau ou ligne de transfert utilisant au moins un dispositif selon une des revendications précédentes.

19. Convoyeur, transporteur de matériau ou ligne de transfert selon la revendication 18, **caractérisé en ce qu'**il existe au moins deux dispositifs agissant en sens opposés.
